# EUROPÄISCHE PATENTSCHRIFT

(11) **EP 1 923 252 B1**
(45) Veröffentlichungstag und Bekanntmachung des Hinweises auf die Patenterteilung: **24.04.2013**
(21) Anmeldenummer: 07020573.7
(22) Anmeldetag: 20.10.2007
(51) Int. Cl.: B60J 10/00, B60J 10/02, B60R 13/07

(54) **Halteleiste**
Retaining strip
Baguette d'appui

(30) Priorität: 17.11.2006 DE 102006054248
(43) Veröffentlichungstag der Anmeldung: 21.05.2008
(73) Patentinhaber: REHAU AG + Co, 95111 Rehau (DE)
(72) Erfinder: Schmidt, Udo, 95030 Hof (DE)

(56) Entgegenhaltungen:
- EP-A- 0 117 816
- US-A- 4 840 001
- US-A- 5 114 206
- US-A- 5 171 051

## Beschreibung

Die Erfindung betrifft eine Halteleiste zur Anbringung an der A-Säule eines Kraftfahrzeuges und zur Befestigung/Aufnahme einer Wasserfangleiste, wobei die Halteleiste lösbar mit der Wasserfangleiste verbindbar ist.

Zur Ableitung von Regenwasser von der Frontscheibe eines Kraftfahrzeugs, beispielsweise in Richtung Fahrzeugdach, werden Wasserfangleisten zwischen A-Säule und Frontscheibe angebracht. Derartige Wasserfangleisten werden mittels Halteleisten an der A-Säule befestigt. Bekannte Halteleisten weisen dazu einen U-förmigen Querschnitt zur Aufnahme der Wasserfangleiste auf und sind zwischen Frontscheibe und A-Säule von Kraftfahrzeugen angeordnet. Bei ungünstigen Bauteilpaarungen kommt es zur Berührung der Frontscheibe mit der Halteleiste, wodurch es zu einer Beschädigung der Halteleiste kommen kann. Auch wird im ungünstigen Fall der Bauteiltoleranzen die Frontscheibe unter Spannung eingebaut. Negativ auf den Abstand zwischen Halteleiste und Frontscheibe wirkt sich auch die Montage der Halteleiste selbst aus.

Der Abstand zwischen der Frontscheibe und einer Halteleiste verändert sich infolge der Temperatureinwirkung durch die unterschiedlichen Ausdehnungskoeffizienten der verwendeten Werkstoffe. Dennoch ist auch bei hohen Außentemperaturen von beispielsweise 30 °C bis 40 °C und der damit verbundenen Aufheizung des Kraftfahrzeugs zu gewährleisten, dass es zu keiner Berührung zwischen Frontscheibe und Halteleiste kommt.

US 5 114 206 A offenbart eine gattungsgemäße Halteleiste.

Der vorliegenden Erfindung liegt somit die Aufgabe zugrunde, eine Halteleiste anzugeben, die eine einfache Montage ermöglicht und eine Berührung der Frontscheibe mit der Halteleiste auch unter Temperatureinwirkung verhindert.

Die Aufgabe wird erfindungsgemäß durch eine Halteleiste gemäß Anspruch 1 gelöst.

Mit der erfindungsgemäßen Halteleiste wird die Berührung der Frontscheibe mit der Halteleiste durch eine Vergrößerung des Abstandes zwischen beiden vorteilhaft vermieden, so dass keine Beschädigung der Halteleiste durch die Scheibe erfolgt und die Scheibe ohne Spannung eingebaut werden kann.

Auch der Nachteil bekannter Halteleisten aus dem Stand der Technik, dass eine genaue Positionierung der Halteleiste an der A-Säule schwierig ist, wird durch eine erfindungsgemäße Halteleiste mit einem Y-förmigen Querschnitt, dessen eine Schenkellänge über die Länge der Halteleiste variiert, vermieden. Dies wird insbesondere dadurch erreicht, dass die eine Schenkellänge an die geometrische Auslegung der A-Säule angepasst ist. Dabei ist die Aufnahme der Wasserfangleiste in einer festen Lage in Bezug auf die A-Säule zu gewährleisten, so dass die Luftgeräusche beim Fahren des Kraftfahrzeugs minimal sind. Durch eine angepasste Länge des Schenkels kann so die Positionierung der Halteleiste an der A-Säule erfolgen.

In einer vorteilhaften Ausgestaltung der Erfindung ist die Halteleiste an der A-Säule geklebt und/oder geclipst und/oder genietet. Bei der Verbindung der Halteleiste mit der A-Säule durch Clipse oder Nieten, ist eine Aufnahme/Öffnung in der A-Säule notwendig. An den Kanten dieser Aufnahmen/Öffnungen ist somit kein Korrosionsschutz vorhanden, wodurch eine Abdichtung der Öffnung beim Verbinden mit der Halteleiste notwendig ist. Bei der Befestigung der Halteleiste mittels eines Klebebandes an der A-Säule ist eine Öffnung in der A-Säule nicht erforderlich und somit ist auch keine Abdichtung dieser Öffnungen vorzunehmen; eine einfache Montage der erfindungsgemäßen Halteleiste an der A-Säule des Kraftfahrzeugs wird vorteilhaft erreicht.

Die erfindungsgemäßen Halteleisten bestehen vorteilhaft aus polymeren Werkstoffen, die aus der Gruppe Polyolefine, insbesondere Polypropylen (PP) oder Polyethylen (PE), Polyamide (PA), insbesondere PA 6, PA 66, PA 11, PA 12, PA 1212, PA 1012, PA 610, PA 612, PA 69, PA 6T, PA 6I, PA 10T, PA 12T, PA 121, PA 6/612, PA 6/66, PA 12T/12, PA 10T/12, PA 12T/106, PA 10T/106, PA 6/612, PA 6/66/610, PA 6/66/12 oder PA 6/6T (siehe ISO 1874/1, Ausgabe 1992), Acrylnitril-Butadien-Styrol-Copolymere (ABS), Polyoxymethylene (POM), Polybutylenterephthalate (PBT), Polyethersulfone (PES), Polycarbonate (PC), Polyphenylensulfide (PPS), Polytetrafluorethylene (PTFE), Polyetheretherketone (PEEK) und Polyimide (PI) oder aus Mischkombinationen daraus, ausgewählt sind.

Den vorgenannten polymeren Werkstoffen für die Halteleiste können mineralische Füllstoffe, wie Calciumcarbonat und Talkum, Glasfasern, Glaskugeln, Kohlenstofffasern und Ruße zur Erhöhung der mechanischen Festigkeit und Steifigkeit zugegeben werden.

Erfindungsgemäße Halteleisten können im Spritzgussverfahren in den vorgenannten polymeren Werkstoffen hergestellt werden. Der Y-förmige Querschnitt der Halteleiste ermöglicht es dabei vorteilhaft, eine Werkzeugtrennebene an der Halteleiste zu ermitteln, die eine hinterschneidungsfreie Herstellung im Spritzgusswerkzeug ermöglicht. Dies auch, wenn gleichzeitig Befestigungselemente für eine Verrastung/Clipsbefestigung der Wasserfangleiste an der Halteleiste vorgesehen sind. Das Spritzgusswerkzeug benötigt durch den Querschnitt der Halteleiste keine Schieber für die Integration von Befestigungsmitteln. Somit reicht eine einfache Öffnungs- und Schließbewegung des Werkzeugs für die Herstellung der Halteleiste aus.

Durch die einfache Gestaltung der Bewegung der Werkzeugteile kann die Fertigungszeit verringert werden. Dadurch wird eine wirtschaftliche Herstellung der Halteleiste ermöglicht.

Weitere Merkmale und Vorteile der vorliegenden Erfindung ergeben sich anhand der nachfolgenden Beschreibung eines bevorzugten Ausführungsbeispiels unter Bezugnahme auf die Zeichnungen. Darin zeigen:
Figur 1 - Schnitt durch eine erfindungsgemäße Halteleiste
Figur 2 - Ausschnitt einer erfindungsgemäßen Halteleiste

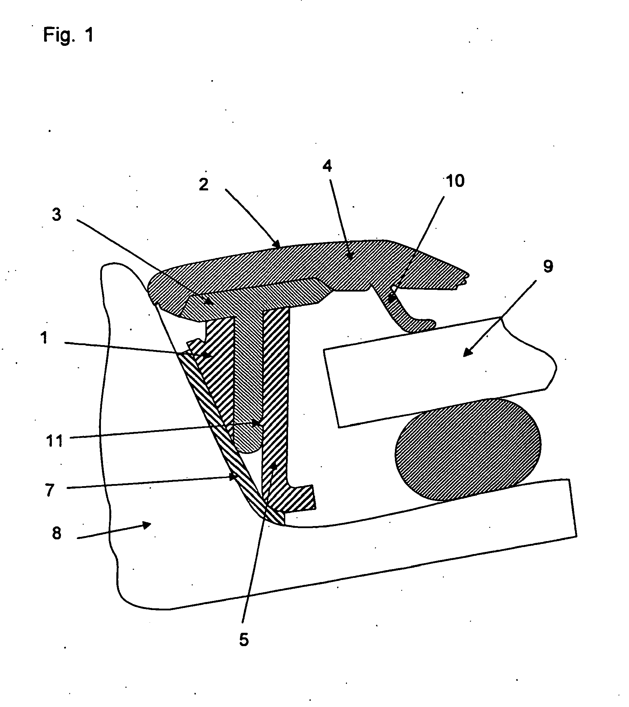

In Figur 1 ist eine erfindungsgemäße Halteleiste (1) im Schnitt dargestellt. Die Halteleiste (1) besteht aus einem Polymer, wie beispielsweise Polypropylen (PP). Zur Erhöhung der Festigkeit sind dem polymeren Werkstoff Glasfasern zugemischt. Dabei beträgt der Gewichtsanteil der Glasfasern ca. 30 %.

In dieser Halteleiste (1) ist eine Wasserfangleiste (2) angeordnet. Diese Wasserfangleiste (2) selbst besteht aus einem Trägerelement (3), das mit einem weicheren Deckelement (4) stoffschlüssig verbunden ist. Das Trägerelement (3) der Wasserfangleiste (2) ist mit der Halteleiste (1) lösbar über eine Rastverbindung verbunden. Dazu enthält die Halteleiste (1) mehrere Aussparungen mit Rastnasen (11), die mit Rastfüßen des Trägerelements (3) in Wirkverbindung stehen. Somit ist eine lösbare formschlüssige Verbindung zwischen der Halteleiste (1) und dem Trägerelement (3) beim Zusammenfügen herstellbar.

Der Schenkel (5) der Halteleiste (1) weist über die Länge der Halteleiste (1) eine variable Länge auf. Somit ist eine Positionierung der Halteleiste (1) an der A-Säule (8) bei der Montage am Kraftfahrzeug einfach möglich.

Die Halteleiste (1) ist über ein Klebeband (7) mit der A-Säule (8) eines Kraftfahrzeugs verbunden. Dabei kann das Klebeband (7) bei der Herstellung der Halteleiste (1) an dieser befestigt und mit einer leicht ablösbaren Deckschicht bis zur Montage geschützt werden. Es sind aber auch andere Anbindungen der Halteleiste (1) an der A-Säule (8) des Kraftfahrzeugs, wie Clips- oder Nietanbindungen, denkbar.

Zwischen der A-Säule (8) und dem Deckelement (4) der Wasserfangleiste (2) ist die Frontscheibe (9) angeordnet. Zur Abdichtung des Spaltes zwischen A-Säule (8) und Frontscheibe (9) eines Kraftfahrzeugs weist die Wasserfangleiste (2) am Deckelement (4) eine Dichtlippe (10) auf, die beim Einbau gegen die Frontscheibe (9) gedrückt wird. Damit entsteht eine Abdichtung des Spalts.

Aus der Figur 1 ist ersichtlich, dass der Abstand zwischen Halteleiste (1) und Frontscheibe (9) durch den Einsatz einer Y-förmigen Halteleiste (1) annähernd parallel verlaufend ist, so dass im Gegensatz zu einer U-förmigen Halteleiste der Abstand vergrößert werden kann, ohne dass eine Berührung der Frontscheibe (9) mit der Halteleiste (1) auch unter Temperatureinwirkung eintritt.

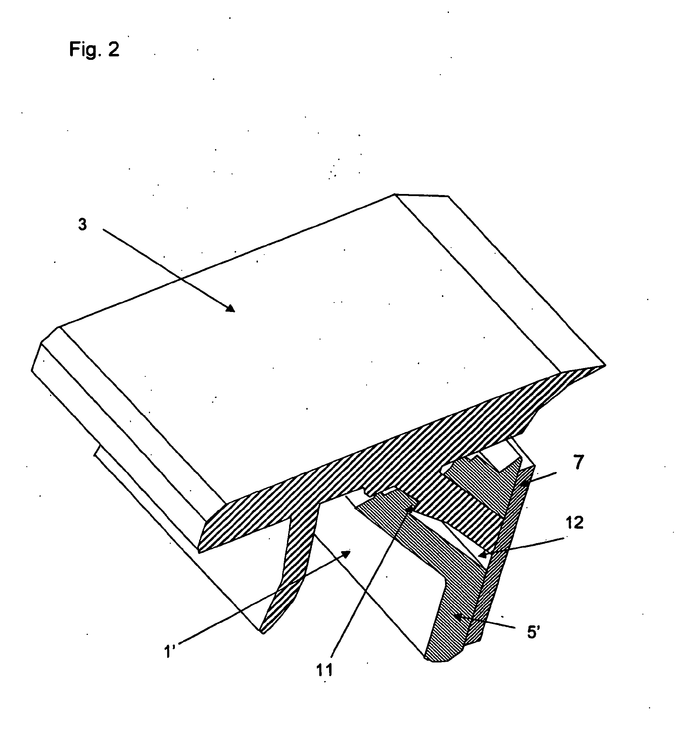

In Figur 2 ist ein Ausschnitt aus einer Halteleiste (1') abgebildet. Auf der einen Seite der Halteleiste (1') ist ein Klebeband (7) zur Befestigung der Halteleiste (1') an der A-Säule (8) eines Kraftfahrzeugs angeordnet. Mit Hilfe der Aussparungen (12) der Halteleiste (1') kann eine Verbindung mit dem Trägerelement (3) einer Wasserfangleiste (2) hergestellt werden. Dabei wird eine formschlüssige Verbindung über die Rastnasen (11) des Haltelements (1') erreicht. Die Länge des Schenkels (5') der Halteleiste (1') ist an die Geometrie der A-Säule (8) angepasst, wodurch eine einfache Positionierung der Halteleiste (1') bei der Montage an der A-Säule (8) gewährleistet ist.

In diesem Erfindungszusammenhang ist es auch denkbar eine partielle, d. h. abschnittsweise, Ausführung des Klebebandes (7), insbesondere an den jeweiligen Endabschnitten der Halteleiste (1') entlang der Anlagefläche an der A-Säule (8) einzusetzen.

## Patentansprüche

1. Halteleiste (1, 1') zur Anbringung an der A-Säule (8) eines Kraftfahrzeuges und zur Befestigung/Aufnahme einer Wasserfangleiste (2), wobei die Halteleiste (1, 1') mindestens einen Abschnitt aufweist, der lösbar mit der Wasserfangleiste (2) verbindbar ist und wobei die Halteleiste (1, 1') einen Y-förmigen Querschnitt aufweist, dessen eine Schenkellänge über die Länge der Halteleiste (1,1') variiert, **dadurch gekennzeichnet, dass** die Länge dieses Schenkels (5, 5') der Halteleiste (1,1') derart über die Länge der Halteleiste (1,1') variiert, dass eine Anpassung der Halteleiste (1, 1') an die geometrische Auslegung der A-Säule (8) gegeben ist.

2. Halteleiste (1, 1') nach Anspruch 1, **dadurch gekennzeichnet, dass** die Halteleiste (1, 1') kraft- und/oder formschlüssig mit der A-Säule (8) verbindbar ist.

3. Halteleiste (1, 1') nach Anspruch 2, **dadurch gekennzeichnet, dass** die Halteleiste (1, 1') zur Befestigung an der A-Säule (8) ein Klebeband (7) aufweist.

4. Anordnung bestehend aus einer Halteleiste nach einem der Ansprüche 1 bis 3 und einer Wasserfangleiste, wobei die Halteleiste mit der Wasserfangleiste lösbar verbunden ist.

## Claims

1. Retaining strip (1, 1') for attaching to the A pillar (8) of a motor vehicle and for fastening/receiving an A-pillar moulding (2), wherein the retaining strip (1, 1') has at least one section which is connectable releasably to the A-pillar moulding (2), and wherein the retaining strip (1, 1') has a Y-shaped cross section, one limb length of which varies over the length of the retaining strip (1, 1'), **characterized in that** the length of said limb (5, 5') of the retaining strip (1, 1') varies over the length of the retaining strip (1, 1') in such a manner that an adaptation of the retaining strip (1, 1') to the geometrical configuration of the A-pillar (8) is provided.

2. Retaining strip (1, 1') according to Claim 1, **characterized in that** the retaining strip (1, 1') is connectable to the A-pillar (8) in a frictional and/or form-fitting manner.

3. Retaining strip (1, 1') according to Claim 2, **characterized in that** the retaining strip (1, 1') has an adhesive tape (7) for the fastening to the A-pillar (8).

4. Arrangement consisting of a retaining strip according to one of Claims 1 to 3 and an A-pillar moulding, wherein the retaining strip is releasably connected to the A-pillar moulding.

## Revendications

1. Baguette d'appui (1, 1') destinée à être montée sur la colonne A (8) d'un véhicule automobile et à fixer/recevoir une baguette de collecte d'eau (2), la baguette d'appui (1, 1') présentant au moins une portion qui peut être connectée de manière amovible à la baguette de collecte d'eau (2), et la baguette d'appui (1, 1') présentant une section transversale en forme de Y, dont une longueur de branche varie sur la longueur de la baguette d'appui (1, 1'), **caractérisée en ce que** la longueur de cette branche (5, 5') de la baguette d'appui (1, 1') varie sur la longueur de la baguette d'appui (1, 1') de telle sorte qu'une adaptation de la baguette d'appui (1, 1') à la conception géométrique de la colonne A (8) soit possible.

2. Baguette d'appui (1, 1') selon la revendication 1, **caractérisée en ce que** la baguette d'appui (1, 1') peut être connectée par engagement par force et/ou par correspondance géométrique à la colonne A (8).

3. Baguette d'appui (1, 1') selon la revendication 2, **caractérisée en ce que** la baguette d'appui (1,1') présente une bande adhésive (7) pour la fixation à la colonne A (8).

4. Agencement constitué d'une baguette d'appui selon l'une quelconque des revendications 1 à 3 et d'une baguette de collecte d'eau, la baguette d'appui étant connectée de manière amovible à la baguette de collecte d'eau.
